Europäisches Patentamt

European Patent Office

Office européen des brevets

(11) EP 0 877 497 A2

(19)

(12) **EUROPÄISCHE PATENTANMELDUNG**

(43) Veröffentlichungstag:
   **11.11.1998   Patentblatt 1998/46**

(51) Int Cl.$^6$: **H04B 17/00**

(21) Anmeldenummer: **98810318.0**

(22) Anmeldetag: **14.04.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **29.04.1997   CH 1000/97**

(71) Anmelder: **ASCOM TECH AG**
   **3018 Bern (CH)**

(72) Erfinder: **Liebendörfer, Matthias**
   **4056 Basel (CH)**

(74) Vertreter:
   **Roshardt, Werner Alfred, Dipl.-Phys. et al**
   **Keller & Partner**
   **Patentanwälte AG**
   **Zeughausgasse 5**
   **Postfach**
   **3000 Bern 7 (CH)**

(54) **Verfahren zum Bestimmen der Uebertragungsqualität eines Signals in einem drahtlosen Kommunikationssystem**

(57)    Das Verfahren dient dazu, die Übertragungsqualität eines Signals in einem drahtlosen Kommunikationssystem mit mindestens einem Sender und einem Empfänger zu bestimmen, wobei die Übertragung in einem gegebenen Gebiet durch vorgegebene Objekte beeinträchtigt wird.

In einer ersten Phase werden alle innerhalb des gegebenen Gebietes liegenden Kanäle dadurch bestimmt, dass die Objekte in homogene Elemente (Li, Lj, Lk) aufgeteilt werden, deren Dimension zumindest ein Mehrfaches einer Wellenlänge des Signals beträgt. Zwischen all jenen Paaren von Elementen (Li, Lj; Lj, Lk), zwischen denen ein direkter räumlicher Signalpfad existiert, wird ein räumlich ausgedehnter Kanal definiert. Eine durch ein gemeinsames Element (Lj) zweier Kanäle (Zij, Zjk) bedingte Kopplung wird in Form von Kopplungskoeffizienten (cijk) ermittelt. In einer zweiten Phase wird das durch den mindestens einen Sender abgestrahlte Signal in die den Ort des Senders kreuzenden Kanäle eingekoppelt. Um die Übertragungsqualität abzuleiten, werden diejenigen Teile des Signals bestimmt, die in die den Ort des Empfängers kreuzenden Kanäle übertragenen werden.

Durch Wiederholen der zweiten Phase für verschiedene Empfängerstandorte kann eine günstige Positionierung der Sender ermittelt werden. Es ist weiter möglich, eine vorerst unbekannte Position eines Senders zu bestimmen, indem zuerst mindestens eine Messung durchgeführt wird und dann die zweite Phase für unterschiedliche vermutete Senderstandorte ausgewertet wird, bis die gewünschte Übereinstimmung zwischen Messung und berechneter Übertragungsqualität vorliegt.

Fig. 1

## Beschreibung

### Technisches Gebiet

Die Erfindung betrifft ein Verfahren zum Bestimmen der Übertragungsqualität eines Signals in einem drahtlosen Kommunikationssystem mit mindestens einem Sender und einem Empfänger, wobei die Übertragung in einem gegebenen Gebiet durch vorgegebene Objekte beeinträchtigt wird.

### Stand der Technik

Die drahtlose Telekommunikation hat in den vergangenen Jahren einen enormen Aufschwung erlebt. Die ständig wachsende Nachfrage verlangt nach immer leistungsfähigeren Funksystemen, und zwar weniger hinsichtlich Sendeleistung als vielmehr hinsichtlich Benutzerkapazität. Von besonderer Bedeutung ist diesbezüglich die zellulare Struktur der Funksysteme. Sie leistet einen wesentlichen Beitrag zur Optimierung der Auslastung der physikalischen Ressourcen (Frequenzbereich, Basisstationen).

Die Aufteilung eines Versorgungsgebietes in Zellen muss sich im Prinzip an den Gegebenheiten des Gebietes orientieren. In einem Gebäude beispielsweise sind Wände, Decken, Böden, Fenster und grössere Einbauten zu berücksichtigen. Diese können die elektromagnetische Strahlung reflektieren, brechen, streuen und/oder dämpfen. Ähnliches gilt im Out-door-Bereich, wo ganze Gebäude, Bäume, Flüsse, Seen, Hügel, Felsen u.dgl. stören können. Ziel ist es natürlich, im gesamten Versorgungsgebiet einen guten Empfang bereitzustellen. Insbesondere sind "Löcher", in welchen der Empfang nicht möglich ist, zu vermeiden.

Ob und gegebenenfalls wo "Löcher" vorhanden sind, hängt von der konkreten Anordnung der ortsfesten Basisantennen des Systems ab. Aus Kostengründen ist es natürlich wünschenswert, mit einer möglichst geringen Anzahl von Antennen auszukommen.

Grundsätzlich ist es möglich (und in vielen Fällen unumgänglich), die Empfangsqualität im vorgegebenen Versorgungsgebiet dadurch zu bestimmen, dass mit einem Telefon bzw. einem Detektor das gesamte Gebiet ausgemessen wird. Problematisch wird es jedoch, wenn es darum geht, die Empfangsqualität an einem bestimmten Ort (z.B. in einem "Loch") durch Ändern der Position einer oder mehrerer Antennen zu verbessern. Der Zusammenhang zwischen Antennenposition und Empfangsqualität ist nämlich weder linear noch stetig. Eine kleine Verschiebung einer Antenne kann zu einer sprunghaften Änderung der Verteilung der Empfangsqualität führen. Folglich ist das Suchen einer besseren Antennenposition sehr aufwendig (nach jeder Verschiebung muss das ganze Gebiet neu ausgemessen werden um zu vermeiden, dass an einer bisher guten Stelle plötzlich ein "Loch" entsteht). Der Aufwand zur Durchführung systematischer Optimierungen ist in aller Regel viel zu gross. Es ist in der Praxis daher nicht möglich, allein durch Messen zu einer systematischen Verbesserung (geschweige denn einer Optimierung) der Empfangsqualität zu kommen.

Es sind deshalb Verfahren entwickelt worden, welche es erlauben, mit Hilfe eines Computers bei gegebener geometrischer Anordnung der Antennen die Empfangsqualität an einem bestimmten Ort zu bestimmen. Als Beispiel sei das Ray-tracing Verfahren erwähnt (vgl. z.B. Michael C. Lawton et al., "The Application of a Deterministic Ray Launching Algorithm for the Prediction of Radio Channel Characteristics in Small-Cell Environment", IEEE Trans. on Vehicular Technology, vol. 43, No. 4, 4. Nov. 1994; oder Steven J. Fortune et al., AT&T Bell Laboratories, "WISE Design of Indoor Wireless Systems", IEEE Computational Science and Engineering, 1995, pp. 58-68). Bei diesem Verfahren wird die Ausbreitung eines Dirac Impulses - unter Anwendung der Prinzipien der geometrischen Optik - vom Sender zu einem ausgewählten Empfänger (bzw. Empfangsort) verfolgt. Der Dirac Impuls wird in Abhängigkeit von der Länge des Pfades in der Phase verschoben (d.h. zeitlich verzögert) und bei jeder Reflexion bzw. Transmission abgeschwächt. Die Empfangsqualität wird durch Auswerten der über die verschiedenen möglichen Pfade eintreffenden Signale ermittelt.

Der rechnerische Aufwand liegt im Ermitteln der möglichen Pfade. Je mehr Reflexionen berücksichtigt werden, desto komplexer wird die Berechnung. In den meisten Fällen können deshalb nur Pfade mit weniger als zehn Reflexionen berücksichtigt werden. Ein weiterer Nachteil der Ray-tracing Methode besteht darin, dass für jeden neuen Empfangsort und für jeden neuen Senderort die möglichen Pfade von neuem bestimmt werden müssen.

Es sind auch Verfahren bekannt, welche auf der Lösung der Maxwell-Gleichungen beruhen. Diese sind jedoch nur für kleine Gebiete mit einer feinen Struktur geeignet. Die Rechenzeit ist etwa proportional zum Quadrat des Verhältnisses zwischen Objektdimension und Wellenlänge. Für grosse Gebiete (wie sie z.B. durch Stockwerke eines Bürogebäudes gebildet werden) sind diese Methoden nicht praktikabel.

### Darstellung der Erfindung

Aufgabe der Erfindung ist es, ein Verfahren der eingangs genannten Art anzugeben, das es erlaubt, mit möglichst geringem Zeitaufwand die Empfangsqualität zu ermitteln. Insbesondere soll sich das Verfahren dazu eignen, bei vorgegebener Geometrie der Objekte eine systematische Optimierung der Senderstandorte durchführen zu können.

Die Lösung der Aufgabe ist durch die Merkmale des Anspruchs 1 definiert. Gemäss der Erfindung erfolgt die Bestimmung der Übertragungsqualität in zwei Stufen. In der ersten Stufe werden alle innerhalb des vorgegebenen Gebietes liegenden Kanäle und deren (durch die physikalischen Eigenschaften der vorgegebenen Objekte charakterisierte) Kopplung bestimmt. In der nachfolgenden zweiten Stufe wird die Einkopplung des mindestens einen vorhandenen Senders in die am Ort des genannten Senders vorhandenen Kanäle bestimmt, um dann die durch Kopplung in die Kanäle am Ort des gewünschten Empfängers übertragenen Signale und deren Auskopplung durch den Empfänger zu ermitteln.

Das erfindungsgemässe Verfahren erlaubt eine relativ schnelle Auswertung einer Mehrzahl von Sender/Empfänger-Konstellationen. Die rechenintensive erste Phase muss nämlich nur einmal für eine gegebene Anordnung von Objekten durchgeführt werden. Werden die Senderpositionen geändert, dann muss nur die neue Verteilung der Einkopplung und die Übertragung auf der Basis der bereits berechneten Kopplungskoeffizienten bestimmt werden.

In der Praxis muss für die Einkopplung nur ein kleiner Teil der Objekte abgesucht werden, während die Übertragung an die Empfänger durch eine einfache Matrixmultiplikation dargestellt werden kann. Werden die Senderpositionen beibehalten und nur die Empfänger verschoben, dann müssen nur die übertragenen Signale neu aufaddiert werden, welche in den am neuen Ort relevanten Kanälen vorhanden sind. In beiden Fällen ist der Rechenaufwand vernachlässigbar klein.

Die erfindungsgemässen Kanäle haben (im dreidimensionalen Modell) eine räumliche bzw. (im zweidimensionalen Modell) eine flächenhafte Ausdehnung. Im Prinzip umfasst jeder dieser Kanäle eine grosse Anzahl von möglichen Signalpfaden.

Um alle Kanäle innerhalb des gegebenen Gebietes zu bestimmen, wird wie folgt vorgegangen: Zunächst werden die Oberflächen der Objekte in homogene Elemente aufgeteilt, deren kleinste geometrische Dimension ein Mehrfaches einer Wellenlänge der zu übertragenden Signale betragen darf. (Bei einer Signalfrequenz von z.B. 3 GHz können die Elemente also eine Abmessung von z.B. einigen Dutzend Zentimetern haben. Die Minimalabmessung sollte nicht kleiner als eine Wellenlänge sein.) Als nächstes wird zwischen all jenen Elementpaaren, zwischen denen zumindest ein direkter Signalpfad existiert, ein räumlich (bzw. flächenhaft) ausgedehnter Kanal definiert. Anfang und Ende des Kanals sind durch das genannte Elementpaar bestimmt.

Das auszubreitende Signal ist gemäss einer bevorzugten Ausführungsform eine skalare Grösse (z.B. die elektrische Feldstärke der elektromagnetischen Welle). Um Signal-Fading bestimmen zu können, wird anstelle einer skalaren Grösse eine komplexwertige verwendet (Amplitude, Phase). Mehrere Senderfrequenzen können auch in einem vektorwertigen Signal gleichzeitig übertragen werden. Es können mit dem Signal auch andere Grössen assoziert werden. Um beispielsweise die Übertragung eines Codes zu bestimmen, kann dieser in einen Vektor mit dem Signal zusammengefasst werden. Auch statische Signaleigenschaften (z.B. Varianz des Signals) können mit dem Signalvektor transportiert werden.

Eine besondere Anwendung des vektorwertigen Signals ergibt sich im Zusammenhang mit der weiter unten beschriebenen Bestimmung der Objekteigenschaften. Für jedes Objekt kann ein Set von verschiedenen Transmissions-, Reflexions- und Absorptionseigenschaften definiert werden, wobei jede Signalkomponente des Vektors entsprechend den jeweils unterschiedlich definierten Eigenschaften übertragen wird. Zuletzt können diejenigen Eigenschaften ermittelt werden, bei welchen die messtechnisch bestimmten Übertragungsqualitäten den berechneten am nächsten kommen.

Jedes Element hat aufgrund seiner vorgegebenen physikalischen Eigenschaften einen bestimmten Einfluss auf ein auftreffendes Signal. Eine ebene Welle kann in Abhängigkeit vom Einfallswinkel reflektiert, transmittiert, gebrochen, gestreut, gedämpft etc. werden. Da jedes Element zu mindestens zwei Kanälen gehört, kann es eine Kopplung dieser Kanäle erzeugen. Die Art bzw. Stärke der Kopplung ist durch die Geometrie und die physikalische Beschaffenheit der Elemente bestimmt und lässt sich infolgedessen im voraus ermitteln (d.h. losgelöst von einer konkreten Sender-Empfänger-Konstellation).

So wie jeder einzelne Kanal eine Vielzahl von einzelnen Signalpfaden umfasst, so schliesst die Kopplung zweier Kanäle eine Vielzahl von möglichen Signalpfad-Übergängen ein. Diese Kopplung wird gemäss der Erfindung in einem einzigen Kopplungskoeffizienten ausgedrückt (eine skalare oder vektorwertige Grösse, reell oder komplex). Die Kopplung beruht dabei vorzugsweise auf einem Modell der geometrischen Optik.

Es ist zu beachten, dass in aller Regel die Kopplung vom Kanal i in den Kanal j nicht gleich ist wie die Kopplung in umgekehrter Richtung (d.h. vom Kanal j in den Kanal i).

Wenn die erste Phase abgeschlossen ist, können die Sender positioniert werden. Die für die Einkopplung relevanten Kanäle ergeben sich dadurch, dass geprüft wird, in welchen räumlichen (bzw. flächenhaften) Kanalbereichen der Ort des Senders liegt. Ein einzelner Sender wird typischerweise in eine Vielzahl sich kreuzender Kanäle ganz unterschiedlicher Orientierung fallen.

Ist der Sender eine omnidirektionale Antenne, dann verteilt sich die Energie des abgestrahlten Signals auf die relevanten Einkopplungskanäle proportional zum jeweils abgedeckten Raumwinkel. Eine richtungsempfindliche bzw. -selektive Antenne koppelt natürlich entsprechend ihrer Abstrahlcharakteristik (Pattern) unterschiedlich stark in die verschiedenen Kanäle ein.

Um die Übertragung bzw. Ausbreitung des eingekoppelten Signals zu bestimmen, werden die in der ersten Phase ermittelten Kopplungskoeffizienten verwendet. Es ergibt sich ein geschlossenes lineares Gleichungssystem, das in bekannter Weise aufgelöst werden kann. Für die Auskopplung am gewünschten Ort des Empfängers sind die diesen Ort abdeckenden Kanäle ("Empfangskanäle") zu bestimmen. Die von diesen an die Empfangsantenne übertragenen Signale werden sodann addiert. Diese zweite Phase kann bei gleichbleibender Umgebung für verschiedene Sender- und Empfängerstandorte mit geringem Aufwand beliebig oft wiederholt werden. Die Übertragungsqualität kann z.B. für einen das ganze Gebiet abdeckenden Raster von Punkten berechnet werden. Die resultierende Verteilung erlaubt eine Gesamtbeurteilung des Ergebnisses.

Selbstverständlich können auch empfängerseitig richtungsempfindliche Antennen eingesetzt werden. Die einzelnen Signale müssen dann vor dem Addieren mit einem richtungsabhängigen Gewicht multipliziert werden.

Das erfindungsgemässe Prinzip lässt sich auf verschiedene Arten nutzen. Es können z.B. geeignete Senderstandorte bestimmt werden, indem wiederholt mindestens ein Senderstandort variiert und die daraus resultierende Übertragungsqualität durch Ausführen der zweiten Phase ermittelt wird, bis ein unter den gegebenen Umständen bestmöglicher Senderstandort gefunden ist. Das Variieren der Senderposition kann manuell oder vorzugsweise automatisch erfolgen.

Es können z.B. die relevanten physikalischen Eigenschaften der Objekte bestimmt werden, indem die rechnerisch berücksichtigte Reflexion, Transmission und/oder Streuung solange variiert wird, bis die rechnerisch ermittelte Empfangsqualität mit der gemessenen übereinstimmt.

Eine weitere Anwendung besteht darin, dass ein vorerst unbekannter Senderstandort ermittelt wird. Dazu wird an mindestens einem Empfangsort ein Messignal bestimmt. Durch wiederholtes Ändern eines vermuteten Senderstandortes und Ermitteln der daraus resultierenden Übertragungsqualität durch Ausführen der zweiten Phase kann die berechnete Übertragungsqualität mit dem Messignal im wesentlichen zur Übereinstimmung gebracht werden.

Das erfindungsgemässe Verfahren kann mit einem an sich bekannten Rechner mit einem Speicher, einer Recheneinheit, einer Eingabe- und einer Ausgabeeinheit durchgeführt werden. Auch das Erfassen der Messignale kann mit konventionellen Messonden erfolgen. Vorteilhaft ist es natürlich, wenn das Gerät möglichst klein und leicht ist, so dass es mobil vor Ort eingesetzt werden kann.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnung

Die zur Erläuterung des Ausführungsbeispiels verwendete Zeichnung zeigt:

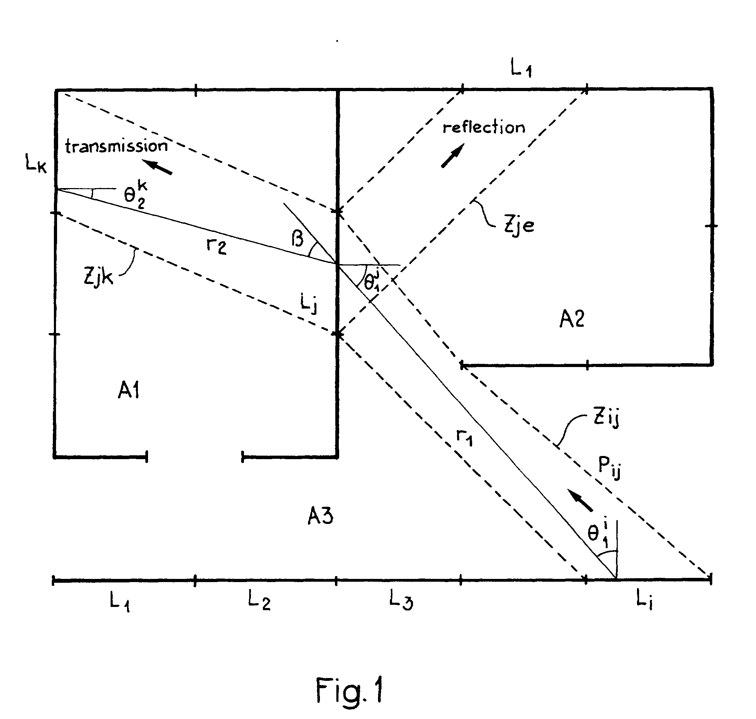

Fig. 1     Eine schematische Darstellung des Grundrisses der störenden Objekte mit einem zweidimensionalen Modell der Ausbreitungskanäle.

Grundsätzlich sind in den Figuren gleiche Teile mit gleichen Bezugszeichen versehen.

## Wege zur Ausführung der Erfindung

Im folgenden soll die Erfindung am Beispiel eines drahtlosen Kommunikationssystems erläutert werden, welches auf der Basis des DECT-Standards in einem Stockwerk eines Gebäudes zu installieren ist.

Vorgegeben sind im konkreten Einzelfall die Wände, Türen, Fenster und - falls vorhanden - grössere ortsfeste Apparaturen, Metallschränke etc. Zunächst muss die Geometrie und Anordnung dieser Objekte aufgenommen werden. Es kann z.B. ein Grundrissplan des Stockwerks digitalisiert werden. Als nächstes werden die Oberflächen der Objekte entsprechend ihren elektromagnetischen Eigenschaften im interessierenden Frequenzbereich charakterisiert und in homogene Elemente zerlegt. Die geometrische Abmessung der Elemente soll sich zwischen der interessierenden Wellenlänge und der gewünschten räumlichen Auflösung der zu berechnenden Empfängerdaten bewegen. Bei beispielsweise 3 GHz sollen die Elemente eine Grösse von 0.5 - 2 m haben.

Mit Vorteil wird die soeben beschriebene Vorarbeit mit Hilfe eines geeigneten Programms durchgeführt. Dieses kann den digitalisierten Plan des Stockwerks anzeigen. Der Benutzer soll z.B. durch Markierungsbefehle die Objekte gleicher Beschaffenheit identifizieren können. Die elektromagnetischen Eigenschaften können in einer Datenbank abrufbereit abgespeichert sein. Sie werden den markierten Objekten zugeordnet.

Schliesslich gibt der Benutzer noch die Position der Sender und Empfänger ein. Das Programm kann z.B. ein Gitter von möglichen Positionen zur Verfügung stellen, so dass der Benutzer einfach die für Sender bzw. Empfänger gewünschten Gitterpunkte markieren kann. Es kann auch in jedem Gitterpunkt standardmässig ein Empfänger vorgesehen sein, so dass die resultierende Übertragungsqualität flächendeckend über das ganze interessierende Gebiet dargestellt werden kann. Im übrigen steht im Bedarfsfall auch die Möglichkeit offen, dass - namentlich für die Sender - die genaue Position (in Form von Koordinaten) eingegeben wird.

Falls die Sender nicht eine omnidirektionale Abstrahlcharakteristik haben, ist diese noch einzugeben. Auch hier ist es natürlich von Vorteil, wenn die entsprechenden Daten von einer Datenbank geholt werden können.

Es wird davon ausgegangen, dass die Empfänger die Ausbreitung der elektromagnetischen Signale nicht beeinflussen. Dies dürfte im Normalfall eine der Realität angemessene Vereinfachung sein.

Soviel zur Erläuterung der Inputdaten. Als nächstes geht es darum, die Kanäle und die Kopplungskoeffizienten zu bestimmen, was beim erfindungsgemässen System vollautomatisch (d.h. programmgesteuert) ablaufen kann.

Das Stockwerk definiert im vorliegenden Beispiel das Gebiet, in welchem die Ausbreitung der Signale ermittelt werden soll. Die Objekte, welche die Ausbreitung beeinträchtigen, sind primär die Aussenwände und die Zwischenwände, welche je durch Fenster oder Türen unterbrochen sein können. Alle diese Objekte werden in Elemente geeigneter geometrischer Abmessung unterteilt. Da das der Erfindung zugrunde liegende Modell primär auf geometrischer Optik und nicht auf Wellenoptik beruht, sollen die Elemente eine Dimension haben, die mindestens einem Mehrfachen einer Wellenlänge entspricht. Bei Wellenlängen im Bereich von beispielsweise 10 cm ist eine Elementgrösse im Bereich von etwa 1 m angepasst. Es ist klar: Je feiner die Unterteilung (d.h. je mehr Elemente pro Objekt), desto besser die Auflösung und desto grösser der Rechenaufwand.

Fig. 1 zeigt einen Ausschnitt aus einem Gebäudeplan. Die als Linien dargestellten Wände grenzen zwei Räume A1, A2 gegenüber einem Gang A3 ab. Weiter ist beispielhaft eine Unterteilung der Wände in kleinere Elemente L1, L2, L3, ..., Li, Lj, Lk, Ll ersichtlich. Die Länge dieser Elemente beträgt im Grundriss etwa 1 m. Selbstverständlich sind stets Abweichungen möglich, da die Abmessung der Objekte nur in den seltensten Fällen mit einem 1 m-Raster zusammenfällt.

Sind alle Objekte in Elemente zerlegt, dann können die Kanäle bestimmt werden. Ein Kanal wird dabei durch zwei Elemente definiert, zwischen welchen mindestens ein direkter (d.h. nicht durch irgend ein anderes Element bzw. Objekt behinderter) Signalpfad existiert. Im Beispiel gemäss Fig. 1 wird zwischen den Elementen Li und Lj ein Kanal Zij definiert. In gleicher Weise existiert zwischen den Elementen Lj und Lk ein Kanal Zjk und zwischen den Elementen Lj und Ll ein Kanal Zjl. Es ist nicht erforderlich, dass von jedem Punkt des einen Elements zu jedem Punkt des anderen ein direkter Signalpfad existiert. Es genügt im Prinzip ein einziger Signalpfad (wenngleich im Normalfall eine sehr grosse bzw. nicht näher definierbare Anzahl von Verbindungen möglich ist).

In Fig. 1 ist auch ersichtlich, dass diverse Elemente durch keinen einzigen direkten Pfad miteinander verbunden werden können. So definieren die Elemente L1 und Ll keinen Kanal, da zwischen ihnen kein direkter Signalpfad existiert. Dasselbe gilt z.B. für die Elemente L3 und Lk.

Die erfindungsgemäss definierten Kanäle haben eine (im zweidimensionalen Modell gemäss Fig. 1) endliche flächenhafte Ausdehnung ungleich Null. Sie schliessen alle möglichen unbehinderten Signalpfade zwischen den begrenzenden Elementen ein.

Es ist darauf hinzuweisen, dass der Kanal Zij (vom Element Li zum Element Lj) im allgemeinen nicht mit dem Kanal Zji (vom Element Lj zum Element Li) gleichgesetzt wird. Jeder Kanal definiert also eindeutige Ausbreitungsrichtung.

U. U. kann es vorteilhaft sein, fiktive transparente Trennwände einzuführen. Auf diese Weise kann beispielsweise die Anzahl der Elemente mit direkter Sichtverbindung reduziert werden. (Die Anzahl der Elemente in einem Raum hat einen markanten Einfluss auf den Rechenaufwand.) Fiktive Trennwände sind auch dann vorzusehen, wenn das relevante Gesamtgebiet nicht allseitig abgeschlossen ist. Die Ermittlung des Signalflusses ist nur dort möglich, wo Kanäle vorhanden sind, und Kanäle können nur zwischen zwei begrenzenden Elementen definiert werden.

Sind alle möglichen Kanäle definiert, dann kann im nächsten Schritt die Kopplung bestimmt werden. Diese rührt daher, dass jedes Element die einfallende elektromagnetische Strahlung transmittieren, reflektieren oder streuen kann. Wie sich ein konkretes Element verhält, hängt natürlich von seiner physikalischen Struktur und der Art der einfallenden Strahlung ab.

Die Wände, Fenster und Türen eines Gebäudes sind in der Regel einer einfachen Klassifikation zugänglich. Es gibt z.B. armierte Betonwände, Holzwände, akustisch isolierte Metallwände, Ziegelsteinwände, Glaswände (= Fenster) bzw. Schichtstrukturen. Die reflektierenden, transmittierenden und streuenden Eigenschaften dieser Wandtypen können ausgemessen oder berechnet und für den späteren Gebrauch z.B. in einer Datenbank abgespeichert werden. (Die Eingabe dieser Eigenschaften wurde weiter oben im Zusammenhang mit den Inputdaten kurz beschrieben.)

Die Kopplung zweier Kanäle Zij und Zjk wird durch einen Kopplungskoeffizienten cijk festgehalten. Gemäss einer bevorzugten Ausführungsform wird die elektrische Feldstärke der vom Sender ausgestrahlten elektromagnetischen Welle als durch die Kanäle auszubreitendes Signal gewählt. Diese Wahl eignet sich insbesondere für das zweidimensionale Modell. Die elektrische Feldstärke nimmt umgekehrt proportional zur Weglänge ab und ist einer linearen Superposition zugänglich. In einer ersten Näherung wird darauf verzichtet, die Phase der elektrischen Feldstärke zu berücksichtigen. Das auszubreitende Signal ist dann proportional zur Amplitude des elektromagnetischen Feldes.

Die phasenlose Grösse des elektrischen Feldes führt zu einer skalaren Unbekannten pro Kanal. Die Ausbreitungsrichtung ist durch die Richtung des Kanals bestimmt. (Beim soeben beschriebenen vereinfachten Modell darf die skalare Grösse nicht mit einem lokalen Wert des tatsächlichen elektrischen Feldes verwechselt werden. Vielmehr stellt diese Grösse einen Wert für den gerichteten Energie- bzw. Leistungsfluss dar. Zur Verdeutlichung dieses Umstandes wird im folgenden nicht die Bezeichnung Eij sondern Pij verwendet.)

Wird die Phase in die Berechnung miteinbezogen, dann muss mit einer komplexen Unbekannten pro Kanal gerechnet werden. Dadurch wird eine korrekte Superposition der Signale erreicht. Ferner erhält man so Informationen über das Schwundverhalten (sog. fast fading) am Ort des Empfängers.

In einem dreidimensionalen Modell wird mit Vorteil der Energiefluss (und nicht das elektrische Feld) als Signal verwendet. Der Energiefluss nimmt umgekehrt proportional zum Quadrat der Weglänge ab und kann ebenfalls unter Vernachlässigung der genauen Phase linear überlagert werden. In diesem Fall entspricht die Überlagerung allerdings nicht wie oben ausschliesslich konstruktiver Interferenzen, sondern liefert die korrekte Signalsumme von statistisch gleichverteilten Phasenlagen der Summanden.

Im Prinzip kann innerhalb eines Kanals eine Mehrzahl von M physikalischen Grössen transportiert werden, vorausgesetzt die Wechselwirkung mit den Objekten kann für jede Grösse durch eine lineare Operation angenähert werden.

Ein von einem ersten Element Li ausgehendes Signal breitet sich im Kanal Zij aus und fällt am Ende des Kanals auf ein zweites Element Lj. Hier wird es aufgeteilt. Ein erster Teil des Signals wird - entsprechend den vorgegebenen Eigenschaften des Elements - absorbiert, während ein zweiter Teil reflektiert wird. Ein dritter Teil des Signals wird möglicherweise transmittiert. Die reflektierten und transmittierten Signalanteile breiten sich in einem oder mehreren Kanälen aus, welche vom Element Lj wegführen. Am Ende dieser Kanäle findet erneut eine Absorption, Reflexion und/ oder Transmission der jeweiligen Signalanteile statt. Auf diese Weise breitet sich ein Signal über das ganze Gebiet aus.

Dieses Aufteilen des Signals wird durch die Kopplungskoeffizienten cijk beschrieben:

$$(\text{I}) \qquad P_{jk} = c_{ijk}P_{ij} \ (i = 1...N, \ j = 1...N, \ k = 1...N)$$

Pij bezeichnet das Signal, welches den Kanal Zij beim Element Lj verlässt, und Pjk das Signal, welches den Kanal Zjk beim Element Lk verlässt. Der Kopplungskoeffizient cijk gibt somit an, welcher Anteil des vom Element Li kommenden Signals - bedingt durch Reflexion, Streuung oder Transmission - das Element Lk erreicht.

Es sind nun für alle Kanäle, die ein gemeinsames Element haben (welches einerseits das Ende des ersten und andererseits den Anfang des zweiten Elements bildet), die Kopplungskoeffizienten cijk zu berechnen. (Es sei darauf hingewiesen, dass bei einer Anzahl von N Elementen sehr viel weniger als $N^3$ Kopplungskoeffizienten existieren, da es weniger als $N^3$ Kanäle gibt und da nur ein kleiner Teil der Kanäle koppeln kann.)

Es wird angenommen, dass die Elemente flach sind (d.h. eine Oberflächenkrümmung wird vernachlässigt). Jedes Element hat so einen eindeutig definierten Einfallswinkel $\theta$ für eine auftreffende ebene Welle. Dieser Einfallswinkel $\theta$ wird als Argument für die Transmissions- und Reflexionskoeffizienten $f(\theta)g(\beta)$ verwendet. Die Funktion $g(\beta)$ berücksichtigt die diffuse Streuung, wobei $\beta$ den Winkel bezeichnet, um welchen ein gestreuter Anteil vom Einfallswinkel abweicht.

Im folgenden wird angenommen, dass eine sphärische Welle vom Element Li ausgeht und das Element Lj erreicht. Weiter wird angenommen, dass die Oberflächensignal-Emissionsdichte $\rho$ auf dem Element Li homogen ist. Ein vom Element Li emittiertes Signal in Richtung $\vec{r}_1$ wird mit der Stärke

$$\rho\left(\hat{r}_1 \cdot d\vec{s}_i\right) = \rho \cos\theta_1^i \, ds_i$$

abgestrahlt ("$\hat{r}$" bezeichnet einen Vektor der Länge 1). Mit dem Einfallswinkel beim Element Lj

$$\cos\theta_1^j = \hat{r}_1 \cdot d\hat{s}_j$$

ergibt sich:

$$(\text{II}) \qquad P_{ij} = \int_{Lj} ds_j \int_{Li} ds_i \rho \cos\theta_1^i \frac{\cos\theta_1^j}{r_1}$$

Für das Signal, welches beim Element Lk via Reflexion, Transmission oder Streuung am Element Lj ankommt, ergibt sich eine ähnliche Formel (für die Notation vgl. Fig. 1):

$$(\text{III}) \qquad P_{jk} = \int_{Lk} ds_k \int_{Lj} ds_j \int_{Li} ds_i \rho \cos\theta_1^i \frac{\cos\theta_1^j}{r_1} f(\theta_1^j) g(\beta) \frac{\cos\theta_2^k}{r_2}$$

Aus den Gleichungen (I) bis (III) erhält man einen Ausdruck für den Kopplungskoeffizienten cijk, welcher die Form einer gewichteten Integration über die Transmissions-, Reflexions- und Streuungskoeffizienten hat.

Allgemein geht es also darum zu berechnen, welches Signal vom Element Li ausgehend durch Wechselwirkung mit Element Lj schliesslich beim Element Lk ankommt. Die Gleichungen (I) bis (III) beschreiben den zweidimensionalen Fall, bei welchem nur über Linienelemente ds integriert wird. Im dreidimensionalen Fall ist natürlich über Flächenelemente zu integrieren (wobei die Ausdrücke für die Winkelabhängigkeit entsprechend komplizierter werden). Den vorliegenden Gleichungen liegt auch die Annahme zugrunde, dass sich das Signal frei ausbreiten kann. Trifft dies nicht zu (d.h. liegt eine durch das Medium bedingte Dämpfung vor), sind entsprechende Terme in die Gleichungen einzuführen.

Im folgenden soll beispielhaft eine Möglichkeit zur Auswertung der Koeffizienten-Formel gezeigt werden. Selbstverständlich gibt es auch andere Wege zur Durchführung der Berechnung.

Geht man davon aus, dass der Effekt der Streuung gering ist, dann kann die Streufunktion g(β) einer Dirac-Funktion δ(β) gleichgesetzt werden. Infolgedessen kann die Integration über das Element Lk ausgeführt werden:

$$(\text{IV}) \quad c_{ijk} = \frac{\int_{Lj} ds_j \int_{Li} ds_i \Delta_2 f(\theta_1^j) \dfrac{\Delta_1 \cos\theta_1^i \cos\theta_1^j}{r_1}}{\int_{Lj} ds_j \int_{Li} ds_i \dfrac{\Delta_1 \cos\theta_1^i \cos\theta_1^j}{r_1}}$$

wobei

$$(\text{V}) \qquad \Delta_1 = \begin{array}{l} 1 \text{ falls } i \neq j \text{ und Strahl } r_1 \text{ nicht behindert} \\[6pt] 0 \text{ sonst} \end{array}$$

$$(\text{VI}) \qquad \Delta_2 = \begin{array}{l} 1 \text{ falls Strahl } r_2 \text{ nicht behindert ist und Element Lk trifft} \\[6pt] 0 \text{ sonst} \end{array}$$

Gemäss einer bevorzugten Ausführungsform kann die Formel für die Kopplungskoeffizienten cijk gestützt auf die an sich bestens bekannte Gauss'sche Integration angenähert werden. Zu diesem Zweck werden Gewichte wl für die auf dem Element Li verteilten Gauss'schen Punkte xl und Gewichte wm für die auf dem Element Lj verteilten Gauss'schen Punkte xm definiert. Die Integrale können dadurch in Summen umgewandelt werden:

$$(\text{VII}) \qquad c_{ijk} \approx \frac{\sum_{lm} \Delta_2(x_l, x_m, L_k) f\left(\theta_1^j(x_l, x_m)\right) w_{lm}}{\sum_{lm} w_{lm}}$$

wobei

$$\text{(VIII)} \quad w_{lm} = w_l^{Gauss} w_m^{Gauss} \frac{\Delta_1(x_l, x_m) \cos\left(\theta_1^i(x_l, x_m)\right) \cos\left(\theta_1^j(x_l, x_m)\right)}{r_1(x_l, x_m)}$$

$\Delta_2(x_l, x_m, L_k)$ bezeichnet im Sinn der Formel (VI) explizit die Abhängigkeit des Strahls $r_2$ von den Gauss'schen Punkten (xl und xm definieren Anfang und Ende des Strahls).

Wenn also der Signalfluss vom Element Li auf das Element Lj bekannt ist, kann berechnet werden, welcher Anteil davon beim Element Lk ankommt.

Als nächstes muss eine Beziehung zwischen dem auf das Element Li einfallenden und dem von diesem weggehenden Signalfluss hergestellt werden. Da im vorliegenden Beispiel die Phase des Signals nicht berücksichtigt ist, werden Wellen mit gleicher Ausbreitungsrichtung (d.h. Wellen im gleichen Kanal) stets konstruktiv überlagert. Mit der erwähnten Vereinfachung ergibt sich für die in den Kanal Zjk austretende Welle Pjk folgendes:

$$\text{(IX)} \quad P_{(jk)} = \sum_{(ij)} c_{ijk} \left( P_{(ij)} + T_{(ij)} \right)$$

Die Notation (ij) steht für einen Index eines spezifischen Kanals. Tij bezeichnet den Beitrag von Sendern (Quellen). Pij enthält also nur die im Kanal Zij fliessende Energie, ohne direkte Strahlung von Quellen. Ein am Element Lj gedämpfter oder gestreuter Anteil einer im Kanal Zij vorhandenen Quelle findet Eingang in die Grösse Pjk. Die in Klammern gesetzten Indizes sollen für einen ganz bestimmten Kanal Zij stehen.

Indem über alle Kanäle Zij, welche mit dem Kanal Zjk koppeln, summiert wird, kann ein lineares Gleichungssystem aufgestellt werden, welches für die unbekannte Signalausbreitung Pij gelöst werden kann:

$$\text{(X)} \quad \sum_{(ij)} \left( \delta_{(ij)(jk)} - c_{ijk} \right) P_{(ij)} = \sum_{(ij)} c_{ijk} T_{(ij)}$$

Das Ergebnis ist ein selbstkonsistentes Set von Signalflüssen innerhalb des vorgegebenen Gebietes. (Falls das Gebiet in zwei oder mehr jeweils nur schwach gekoppelte Teilgebiete unterteilt werden kann, dann kann gewünschtenfalls für jedes der Teilgebiete ein "eigenständiges" Gleichungssystem aufgestellt und gelöst werden. Die selbstkonsistente Lösung im gesamten Gebiet kann dann iterativ angenähert werden.) Schliesslich geht es noch darum, die Quellen zu definieren und den Empfang an einem gewünschten Ort zu ermitteln.

Eine sehr einfache Methode zur Bestimmung des Quellenterms

$$\sum_{(ij)} c_{ijk} T_{(ij)}$$

besteht z.B. darin, für jedes direkt angestrahlte Element die entsprechende Komponente des Signals zu bestimmen. Indem der Einfallswinkel beim Element Lj ermittelt wird, kann dieses direkte Signal einem Kanal Zij zugeordnet werden, um die Indizes zu bestimmen. Dann wird mit den bekannten Kopplungskoeffizienten cijk multipliziert und die Summe berechnet.

Die soeben beschriebene einfache Methode hat gewisse Nachteile, wenn die als punktförmig angenommene Quelle zwischen zwei parallelen Kanälen liegt. Die beiden genannten Kanäle werden dann nicht in hinreichender Weise mit Energie gespiesen.

Die im folgenden beschriebene direkte Berechnung vermeidet dieses Problem. Die Formel für den Quellenterm lautet wie folgt:

$$\text{(XI)} \quad c_{ijk} T_{ij} = \int_{Lk} ds_k \int_{Lj} ds_j \, f(\theta_1^j) g(\beta) \sqrt{\frac{P_t(\Omega)}{4\pi}} \frac{\cos(\theta_1^j)}{r_1} \frac{\cos(\theta_2^k)}{r_2}$$

$P_t(\Omega)$ bezeichnet die Leistung, welche entsprechend der charakteristischen Abstrahlung der Antenne in Richtung des Raumwinkels $\Omega$ abgestrahlt wird.

Ähnlich wie bei der Berechnung der Kopplungskoeffizienten cijk kann auch hier die Integration über Lj ausgeführt werden, wenn für die Streuung eine Dirac-Verteilung $\delta$ angenommen wird:

$$(XII) \qquad c_{ijk} T_{ij} = \int_{Lk} ds_k \Delta_1 \Delta_2 f(\theta_1^j) \sqrt{\frac{P_t(\Omega)}{4\pi}} \frac{\cos(\theta_2^k)}{(r_1 + r_2)}$$

Zur Auswertung des Integrals wird wiederum eine Approximation durchgeführt. Es wird angenommen, dass die Differenz zwischen verschiedenen Strahlen zwischen Quelle und Element Lk vernachlässigbar klein ist. Das Integral zerfällt infolgedessen in zwei unabhängige Teile. Der erste Teil entspricht dem Signal, das in den durch das Element Lk eingenommenen Raumwinkel emittiert wird. Der zweite Teil kann durch eine Summe über die Gauss'schen Punkte xl auf dem Element Lk approximiert werden:

$$(XIII) \qquad c_{ijk} T_{ij} = \left( \int_{Lk} ds_k \sqrt{\frac{P_t(\Omega)}{4\pi}} \frac{\cos(\theta_2^k)}{(r_1 + r_2)} \right) \sum_l \Delta_1(l) \Delta_2(l) f\left(\theta_1^j(x_l)\right) w_l$$

Nach einer Summation über alle relevanten Quellenterme Tij ist die rechte Seite der Gleichungen (X) bekannt. Durch Invertieren der Matrix

$$\left( \delta_{(ij)(jk)} - c_{ijk} \right)$$

können alle unbekannten Signale Pij ermittelt werden.

Nun kann an den gewünschten Orten der Empfang ermittelt werden. Zu diesem Zweck kann das ganze Gebiet mit einem Gitter von Punkten überzogen werden. An jedem dieser potentiellen Empfangsorte muss die in den (den Empfangsort kreuzenden) Kanälen vorhandene Energie des Signals summiert werden. Dabei ist zu beachten, dass die Signalflussdichte vom Querschnitt des Kanals abhängt. Dieser Querschnitt kann sehr stark variieren, wenn gewisse direkte Signalpfade innerhalb des entsprechenden Kanals durch Objekte behindert sind (vgl. z.B. Kanal Zij in Fig. 1).

Gemäss einer besonders bevorzugten Ausführungsform werden die bereits ermittelten Gauss'schen Punkte xl verwendet. Von jedem dieser Punkte xl auf dem Element Li wird eine virtuelle Röhre mit einem bestimmten Querschnitt zu jedem Gauss'schen Punkt xm auf dem Element Lj gezogen. Wenn diese virtuelle Röhre xl-xm durch ein Objekt behindert ist, wird $\Delta_{lm} = 0$ gesetzt, sonst gilt $\Delta_{lm} = 1$. Das Signal Pij wird auf die unbehinderten virtuellen Röhren verteilt und zwar gewichtet mit den Gauss'schen Gewichten:

$$(XIV) \qquad P_{ij}^{lm} = \frac{\Delta_{lm} w_l w_m P_{ij}}{\sum_{lm} \Delta_{lm} w_l w_m}$$

Alle Empfangsorte, welche in einer virtuellen Röhre liegen, werden mit dem Signal $P_{ij}^{lm}$ beaufschlagt. Bei Berücksichtigung des relativen Absorptionsquerschnittes $A(\theta)$ der Empfangsantenne in Richtung des Winkels $\theta$ der virtuellen Röhre ergibt sich ($\lambda$ = Wellenlänge des Signals):

$$(XV) \qquad P_r = P_{ij}^{lm} \sqrt{\frac{\lambda^2 A(\theta)}{4\pi}}$$

Zum Querschnitt bzw. Durchmesser der virtuellen Röhren ist folgendes zu sagen: Die "harte" Begrenzung der Röhren führt dazu, dass zufällige Zwischenräume oder Überlappungen zu Störungen bei einem sich über mehrere Röhrenquerschnitte erstreckenden Signal führen können. Um diese Störungen zu vermeiden, wird der Signalfluss innerhalb einer Röhre gemäss einer Glättungsfunktion s(d) verteilt (d ist dabei der Abstand des Empfangsortes von der Achse der Röhre). Als Glättungsfunktion kann z.B. ein Polynom vierter Ordnung auf einem kompakten Träger verwendet werden, wobei das Integral über die Fläche des Querschnittes auf 1 nominiert ist.

Die Auflösung bzw. Genauigkeit der Berechnung hängt von der Grösse der Querschnitte der virtuellen Röhren ab, welche ihrerseits durch den Abstand der Gauss'schen Punkte auf den Elementen bestimmt sind.

Die soeben beschriebene Art der Auskopplung stellt nur ein mögliches Beispiel dar. Es sind durchaus auch andere Verfahren denkbar. Ziel soll es aber sein, den Rechenaufwand bei der Ein- und Auskopplung möglichst klein (namentlich kleiner als den Aufwand zur Berechnung der Kopplungskoeffizienten) zu halten. Dies aus folgenden Gründen: Sind die Geometrie der Räumlichkeiten und die Eigenschaften der Objekte einmal eingegeben, dann können die Kopplungskoeffizienten berechnet werden, ohne dass die Standorte der Sender und Empfänger berücksichtigt werden müssen. Werden nachher verschiedene Sender- und/oder Empfängerpositionen ausgewertet, dann kann stets auf die gleiche Kopplungsmatrix zurückgegriffen werden. Auch das Herleiten der Empfangssignale ist im Prinzip bereits ausgeführt. Das Gebiet ist nämlich mit einer grossen Anzahl von potentiellen Empfangsorten überzogen.

Soll also im Rahmen einer Optimierung der Senderpositionen die Auswertung der Empfangsqualität mehrmals durchgeführt werden, dann genügt es, die Einkopplung neu zu ermitteln. Das Auflösen des Gleichungssystems zur Berechnung der Signalausbreitung und das Bestimmen der Signalleistung in den potentiellen Empfangsorten ist mit einem verhältnismässig kleinen Rechenaufwand verbunden. Gegenüber den bekannten Verfahren (wie z.B. Ray-tracing) ergibt sich dadurch eine wesentliche Zeitersparnis. Es ist z.B. möglich, vor Ort die Geometrie und die Umgebungsbedingungen einzugeben und (innert Minuten) eine Optimierung der Senderanzahl und/oder Senderpositionen durchzuführen. Die Erfindung gibt dem Installateur somit ein sehr nützliches Werkzeug in die Hand.

Die Optimierung kann von Hand oder automatisch durchgeführt werden. Bei der manuellen Optimierung gibt der Installateur selber die Senderpositionen ein, die ihm - aufgrund seiner Erfahrung - erfolgversprechend erscheinen. Das System liefert ihm z.B. eine farblich visualisierte Verteilung der Empfangsqualität. Der Installateur kann nun weitere Senderpositionen auswerten lassen und schliesslich diejenige Senderpositionierung installieren, welche sicherstellt, dass an keinem Ort des Gebietes die Empfangsqualität unter einen vorgegebenen Wert fällt.

Bei der automatischen Optimierung wählt das System selbständig gewisse Senderstandorte aus und schlägt aufgrund der jeweils berechneten Verteilung der Empfangsqualität die günstigste Variante vor. Die Auswahl neuer Senderstandorte wird dabei jeweils durch den Erfolg der schon berechneten Standorte geleitet. Die Senderstandorte müssen dabei gewisse Randbedingungen erfüllen. So muss eine Basisstation z.B. an einer Wand oder einer Decke befestigt werden können. Zur Einschränkung der abzusuchenden Varianten können diese Randbedingungen noch weiter verschärft werden: Es kann z.B. von einer durch den Installateur vorgegebenen provisorischen Positionierung ausgegangen werden, welche dann innerhalb gewisser Grenzen systematisch variiert wird.

Im folgenden sollen beispielhaft einige Varianten zum beschriebenen Ausführungsbeispiel skizziert werden.

- Die Streufunktion $g(\beta)$ kann - anstelle einer Dirac-Funktion - eine mehr oder weniger komplizierte Funktion sein z.B. entsprechend den Oberflächenrauhigkeiten der Objekte bzw. Elemente.

- Namentlich bei mehrschichtigen und dickeren Wänden können Brechung und Streuung einen spürbaren Effekt haben. Entsprechend ist es von Vorteil, dies zu berücksichtigen.

- Zur Beschreibung des Signals kann statt eines reellen Wertes ein komplexer verwendet werden (Amplitude, Phase). Auf diese Weise ist es möglich, den Signalschwund, welcher durch destruktive Interferenzen herbeigeführt wird, zu berücksichtigen bzw. abzuschätzen.

- Es kann ein Leistungsverzögerungsprofil berechnet werden, indem ein Breitbandsignal in harmonische Signalkomponenten zerlegt und für die zu ermittelnde Unbekannte pro Kanal ein Vektor aus komplexen Zahlen definiert wird. Jede dieser komplexen Zahlen gehört zu einer bestimmten Frequenz der harmonische Reihe. Das gewünschte Leistungsverzögerungsprofil wird dadurch erhalten, dass die harmonischen Reihen in den Empfangsorten kombiniert bzw. überlagert werden und anschliessend mit einer Fouriertransformation vom Frequenz- in den Zeitbereich transformiert werden.

- Die physikalischen Eigenschaften der Wände, Böden und Decken sind nicht immer einfach zu bestimmen. Oft ist z.B. der konstruktive Aufbau des Gebäudes nicht im Detail bekannt und es besteht keine Möglichkeit, die Wand systematisch auszumessen. In solchen Fällen kann es von Vorteil sein, mit Hilfe des erfindungsgemässen Verfahrens ein sogenanntes Fitting durchzuführen. Zu diesem Zweck wird z.B. ein Sender positioniert und die Empfangsqualität an mehreren Orten ausgemessen. Gleichzeitig wird auch die Auswertung mit dem erfindungsgemässen Verfahren für die entsprechenden Empfangsorte vorgenommen, wobei nur grobe Annahmen betreffend die physikalischen Eigenschaften der unbekannten Objekte gemacht werden. Die gemessenen und die berechneten Werte werden verglichen und die Annahmen werden präzisiert. Daraufhin wird die Berechnung erneut durchgeführt und geprüft, ob die gemessenen und berechneten Werte (im Rahmen der Messgenauigkeit) übereinstimmen. Sobald die gewünschte Übereinstimmung erreicht ist, wird der iterative Prozess beendet. Nun können die Sender positioniert und die Empfangsqualität bestimmt werden.

- Anstatt die Berechnung für jede Wahl der Objekteigenschaften von neuem zu beginnen, kann auch ein ganzes Set von Eigenschaften auf einmal durchgerechnet werden. Zu diesem Zweck wird das Signal als Vektor definiert, welcher z.B. soviele Komponenten hat, wie unterschiedliche Eigenschaften definiert worden sind. Die am Empfangsort resultierenden Signalvektoren geben die Übertragungsqualität für jede der unterschiedlich gewählten Objekteigenschaften wieder. Durch einen Vergleich jeder einzelnen Signalkomponente mit dem Messignal kann festgestellt werden, welche Wahl der Objekteigenschaften zu einem mit der Messung konformen Ergebnis geführt hat.

- Die Erfindung wurde an einem zweidimensionalen Modell erläutert. Es ist ohne konzeptionelle Änderungen möglich, das Verfahren auf ein dreidimensionales Modell anzuwenden. Der wesentliche Grund für diese Erweiterungsmöglichkeit ist darin zu sehen, dass die Verbindung der gesamten Umgebungsgeometrie allein durch die Kopplungskoeffizienten ausgedrückt wird. Für die Berechnung eines solchen Koeffizienten sind aber nur drei Elemente Li, Lj, Lk zu berücksichtigen. D.h. die als ganzes sehr komplexe Geometrie ist in eine grosse Anzahl von lokalen Geometrien zerlegt. Dieses Prinzip ist unabhängig davon, ob das Modell zwei- oder dreidimensional ist.

Das erfindungsgemässe Verfahren kann im Prinzip auch zur Ermittlung der Transmissions-, Reflexions- und Absorptionseigenschaften eines Testobjektes eingesetzt werden. Das genannte Testobjekt kann z.B. eine Wand sein, deren konstruktiver Aufbau nicht mit einfachen physikalischen Modellen angenähert werden kann. Vor dieser Wand wird ein Sender montiert, welcher motorisch gesteuert verschiebbar ist. Vor und hinter der Wand sind mehrere Messonden positioniert. Ein Computer registriert die Signale der Messonden bei verschiedenen Positionen des Senders. (Der Sender wird automatisch verschoben entsprechend einem vorgegebenen Programm.) Jede Position des Senders wird auch nach dem erfindungsgemässen Fitting-Verfahren verarbeitet, um die am besten angepassten Transmissions-, Reflexions- und Absorptionskoeffizienten zu ermitteln. Das Ergebnis dieser Messung sind also die genannten Koeffizienten (evtl. in Abhängigkeit vom Einfallswinkel).

Die Erfindung kann auch dazu verwendet werden, um aus dem an verschiedenen Orten gemessenen Signal eines Senders dessen unbekannte Position zu bestimmen. Dabei wird in einer bekannten Umgebung (d.h. bei vorgegebener Anordnung und Beschaffenheit der Objekte im interessierenden Gebiet) an mindestens einem Ort das Signal des gesuchten Senders gemessen. Wie beim bereits beschriebenen Vorgehen zur automatischen Optimierung eines Senderstandortes kann nun die Position gesucht werden, deren berechnetes Signal an den Messorten mit den Messwerten am besten übereinstimmt. D.h. die provisorisch gewählte Position wird solange verschoben, bis die gewünschte Übereinstimmung zwischen Berechnung und Messung vorliegt. Dabei wird wiederum der Vorteil genutzt, dass beim erfindungsgemässen Verfahren die durch die Geometrie bestimmten Grössen (Kopplungskoeffizienten) nur einmal berechnet werden müssen.

Es kann von Vorteil sein, richtungsabhängige Messungen durchzuführen. Wenn die Messrichtungen gerade den Richtungen der Kanäle entsprechen, können die gemessenen Signale direkt mit den berechneten Signalflüssen verglichen werden. Die Kombination der Signalflüsse beim Empfänger in den Gleichungen (XIV) und (XV) entfällt dann. Durch geeignete Trennung verschiedener Sender (Frequenz, Codierung) kann dieses Verfahren zur Lokalisierung auch auf mehrere Sender gleichzeitig angewendet werden.

Das erfindungsgemässe Verfahren kann softwaremässig implementiert werden. Die Ausgangsdaten sind physikalische bzw. technische Werte der Objekte (z.B. Absorptions-, Transmissions- und Reflexionskoeffizienten der Wände, Decken, Böden) und geometrische Vorgaben. Die Ausbreitung des Signals erfolgt nach physikalischen Grundprinzipien. Die automatisch errechnete Verteilung der Empfangsqualität erlaubt eine Entscheidung über eine geeignete Positionierung der Sender.

Es ist von Vorteil, wenn die Verteilung der Empfangsqualität auf einem Bildschirm grafisch dargestellt wird. Dem zulässigen Wertebereich wird beispielsweise eine Farbskala zugeordnet. Der Benutzer kann folglich auf einen Blick erkennen, wo die Werte hoch und wo sie niedrig sind. Bei einer automatischen Optimierung sind natürlich die besten Senderstandorte von Interesse.

Zusammenfassend ist festzustellen, dass durch die Erfindung ein Verfahren geschaffen worden ist, welches die gezielte Optimierung der Senderstandorte bei zellularen und mikrozellularen Mobilfunksystemen erlaubt. Die erfindungsgemässe Grundidee kann auch zur Lokalisierung eines Senders mit unbekanntem Standort verwendet werden. Auch für sehr komplexe Geometrien können mehrere Senderanordnungen innert kürzester Zeit ausgewertet werden.

**Patentansprüche**

1. Verfahren zum Bestimmen der Übertragungsqualität eines Signals in einem drahtlosen Kommunikationssystem mit mindestens einem Sender und einem Empfänger, wobei die Übertragung in einem gegebenen Gebiet durch vorgegebene Objekte beeinträchtigt wird, dadurch gekennzeichnet, dass
in einer ersten Phase

   a) alle innerhalb des gegebenen Gebietes liegenden Ausbreitungskanäle dadurch bestimmt werden, dass

   b) die Objekte in homogene Elemente ($L_i$, $L_j$, $L_k$) aufgeteilt werden, deren Dimension zumindest ein Mehrfaches einer Wellenlänge des Signals beträgt,

   c) zwischen all jenen Paaren von Elementen ($L_i$, $L_j$; $L_j$, $L_k$), zwischen denen ein direkter räumlicher Signalpfad existiert, ein räumlich ausgedehnter Ausbreitungskanal definiert wird,

   d) eine durch ein gemeinsames Element ($L_j$) zweier Ausbreitungskanäle ($Z_{ij}$, $Z_{jk}$) bedingte Kopplung der Ausbreitungskanäle in Form von Kopplungskoeffizienten ($c_{ijk}$) ermittelt wird,

   und dass in einer zweiten Phase

   e) das durch den mindestens einen Sender abgestrahlte Signal in die den Ort des Senders kreuzenden Ausbreitungskanäle eingekoppelt wird und

   f) diejenigen Teile des Signals bestimmt werden, welche in die den Ort des Empfängers kreuzenden Ausbreitungskanäle übertragen werden, um daraus die Übertragungsqualität abzuleiten.

2. Verfahren nach Anspruch 1, dadurch gekennzeichnet, dass die kleinste geometrische Dimension der Elemente ($L_i$, $L_j$, $L_k$) nicht kleiner als eine Wellenlänge des Signals gewählt wird, insbesondere dass bei einer Wellenlänge im Zentimeter-Bereich die genannte Dimension etwa das Zehnfache der Wellenlänge beträgt.

3. Verfahren nach Anspruch 1 oder 2, dadurch gekennzeichnet, dass das Signal durch eine skalare Grösse beschrieben wird.

4. Verfahren nach Anspruch 1 oder 2, dadurch gekennzeichnet, dass das Signal durch eine komplexe Grösse beschrieben wird, wobei der Realteil für die Amplitude und der Imaginärteil für die Phase des Signals steht.

5. Verfahren nach Anspruch 1 oder 2, dadurch gekennzeichnet, dass das Signal durch einen Vektor beschrieben wird, dessen Komponenten unterschiedlichen Bestandteilen, insbesondere unterschiedlichen Frequenzen des Signals entsprechen.

6. Verfahren nach einem der Ansprüche 1 bis 4, dadurch gekennzeichnet, dass die Empfangsqualität für einen das ganze Gebiet abdeckenden Raster von Gitterpunkten bestimmt wird.

7. Anwendung des Verfahrens nach einem der Ansprüche 1 bis 6 zur Bestimmung von geeigneten Senderstandorten, wobei wiederholt mindestens ein Senderstandort variiert und die daraus resultierende Übertragungsqualität durch Ausführen der zweiten Phase ermittelt wird, um so einen unter den gegebenen Umständen bestmöglichen Senderstandort zu erhalten.

8. Anwendung des Verfahrens nach einem der Ansprüche 1 bis 6 zur Bestimmung der relevanten physikalischen Eigenschaften der Objekte durch Anpassen der rechnerisch berücksichtigten Reflexion, Transmission und/oder Streuung, bis die rechnerisch ermittelte Empfangsqualität mit der gemessenen übereinstimmt.

9. Anwendung des Verfahrens nach einem der Ansprüche 1 bis 6 zur Bestimmung eines unbekannten Senderstandortes, wobei an mindestens einem Empfangsort ein Messignal bestimmt wird und wiederholt ein vermuteter Senderstandort variiert und die daraus resultierende Übertragungsqualität durch Ausführen der zweiten Phase ermittelt wird, bis die Übertragungsqualität mit dem Messignal im wesentlichen übereinstimmt.

10. Vorrichtung zur Durchführung des Verfahrens nach einem der Ansprüche 1 bis 6, mit einem Speicher, einer Recheneinheit, einer Eingabe- und einer Ausgabeeinheit, wobei geometrische Abmessungen und physikalische Eigenschaften der vorgegebenen Objekte abgespeichert werden, wonach mit der Recheneinheit in einer ersten Phase

a) alle innerhalb des gegebenen Gebietes liegenden Ausbreitungskanäle bestimmt werden, indem

b) die Objekte in homogene Elemente (Li, Lj, Lk) aufgeteilt werden, deren Dimension zumindest ein Mehrfaches einer Wellenlänge des Signals beträgt,

c) zwischen all jenen Paaren von Elementen (Li, Lj; Lj, Lk), zwischen denen ein direkter räumlicher Signalpfad existiert, ein räumlich ausgedehnter Ausbreitungskanal definiert wird, und

d) eine durch ein gemeinsames Element (Lj) zweier Ausbreitungskanäle (Zij, Zjk) bedingte Kopplung der Ausbreitungskanäle in Form von Kopplungskoeffizienten (cijk) ermittelt wird,

und dass in einer zweiten Phase

e) das durch den mindestens einen Sender abgestrahlte Signal in die den Ort des Senders kreuzenden Ausbreitungskanäle eingekoppelt wird und

f) diejenigen Teile des Signals bestimmt werden, welche in die den Ort des Empfängers kreuzenden Ausbreitungskanäle übertragen werden, wonach die ermittelte Übertragungsqualität durch die Ausgabeeinheit visuell dargestellt wird.

Fig. 1